(19) **Europäisches Patentamt / European Patent Office / Office européen des brevets**

(11) **EP 3 172 347 B1**

(12) # FASCICULE DE BREVET EUROPEEN

(45) Date de publication et mention de la délivrance du brevet:
**18.07.2018 Bulletin 2018/29**

(21) Numéro de dépôt: **15739287.9**

(22) Date de dépôt: **20.07.2015**

(51) Int Cl.:
**C22B 3/00** *(2006.01)*    **C22B 59/00** *(2006.01)*

(86) Numéro de dépôt international:
**PCT/EP2015/066578**

(87) Numéro de publication internationale:
**WO 2016/012413 (28.01.2016 Gazette 2016/04)**

(54) **PROCEDE DE SEPARATION DES COMPOSANTS D'UN SUBSTRAT SOLIDE COMPRENANT UN SUPPORT A BASE D'OXYDE DE TERRE RARE ET DES PARTICULES D'UN METAL NOBLE, PAR DISSOLUTION SELECTIVE DU SUPPORT**

VERFAHREN ZUR TRENNUNG DER KOMPONENTEN EINES FESTEN SUBSTRATS MIT EINEM TRÄGER AUS SELTENERDOXID UND PARTIKEL EINES EDELMETALLS DURCH SELEKTIVE AUFLÖSUNG DES TRÄGERS

METHOD FOR SEPARATING THE COMPONENTS OF A SOLID SUBSTRATE COMPRISING A SUPPORT MADE FROM RARE EARTH OXIDE AND PARTICLES OF A NOBLE METAL, BY SELECTIVE DISSOLVING OF THE SUPPORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2014 FR 1457011**

(43) Date de publication de la demande:
**31.05.2017 Bulletin 2017/22**

(73) Titulaires:
- **AREVA NC**
  **92400 Courbevoie (FR)**
- **Commissariat à l'Énergie Atomique et aux Énergies Alternatives**
  **75015 Paris (FR)**
- **Centre National de la Recherche Scientifique**
  **75016 Paris (FR)**

(72) Inventeurs:
- **VIROT, Matthieu**
  **84430 MONDRAGON (FR)**
- **BEAUDOUX, Xavier**
  **F-30200 Bagnols Sur Ceze (FR)**
- **CHAVE, Tony**
  **F-30200 Bagnols Sur Ceze (FR)**
- **LETURCQ, Gilles**
  **F-84850 Camaret Sur Aigues (FR)**
- **NIKITENKO, Sergueï**
  **F-84100 Orange (FR)**

(74) Mandataire: **Brevalex**
**56, Boulevard de l'Embouchure**
**B.P. 27519**
**31075 Toulouse Cedex 2 (FR)**

(56) Documents cités:
**US-A1- 2004 081 602     US-A1- 2007 104 628**
**US-B1- 7 935 173**

- **MATTHIEU VIROT ET AL: "Catalytic dissolution of ceria under mild conditions", JOURNAL OF MATERIALS CHEMISTRY, vol. 22, no. 29, 1 janvier 2012 (2012-01-01), page 14734, XP055156029, ISSN: 0959-9428, DOI: 10.1039/c2jm31996a**
- **M SATERNUS ET AL: "POSSIBLE WAYS OF REFINING PRECIOUS GROUP METALS (PGM) OBTAINED FROM RECYCLING OF THE USED AUTO CATALYTIC CONVERTERS", METALURGIJA, vol. 52, no. 2, 1 janvier 2013 (2013-01-01), pages 267-270, XP055156246, ISSN: 0543-5846**

EP 3 172 347 B1

**Description**

**DOMAINE TECHNIQUE**

L'invention concerne un procédé de séparation des composants d'un substrat solide comprenant un support à base d'oxyde de terre rare et des particules d'un métal noble, par dissolution sélective du support.

Plus précisément, l'invention a trait à un procédé de traitement d'un substrat solide comprenant un support en au moins un oxyde choisi parmi les oxydes d'un premier métal choisi parmi les terres rares, et les oxydes mixtes d'un premier métal choisi parmi les terres rares et d'au moins un second métal différent du premier métal, ledit substrat comprenant au moins une surface sur laquelle sont déposées des particules constituées par au moins un métal noble, afin de séparer le premier métal, le deuxième métal éventuel, et le métal noble qui constituent les particules, ledit procédé comprenant une étape de dissolution sélective du substrat.

Le procédé selon l'invention peut notamment trouver son application dans le traitement des substrats comprenant des supports en oxyde de cérium éventuellement dopés, quel que soit le domaine dans lequel ces substrats sont utilisés.

Ainsi le procédé selon l'invention peut-il être notamment appliqué au traitement des supports de catalyseurs automobiles à base de $CeO_2$ en vue de la séparation et du recyclage du cérium et des métaux platinoïdes déposés sur ces supports.

Mais le procédé selon l'invention peut également s'appliquer au traitement de substrats comprenant des oxydes de cérium, éventuellement dopés, mis en oeuvre dans d'autres domaines comme par exemple la catalyse organique, l'électronique, l'optique, les électrolytes des piles à combustible à oxyde solide, la catalyse dans l'industrie pétrochimique, par exemple la catalyse des réactions de craquage en lit fluidisé, etc.

**ÉTAT DE LA TECHNIQUE ANTÉRIEURE**

La combinaison d'éléments appartenant à la famille des terres rares et d'éléments appartenant à la famille des métaux nobles et notamment des platinoïdes est largement utilisée dans l'industrie, et en particulier dans le domaine de la catalyse. Les éléments de la famille des terres rares, sous la forme d'oxydes constituent alors un support pour des particules catalytiques de métaux nobles.

Par exemple, les pots catalytiques employés dans l'industrie automobile sont constitués d'une enveloppe en acier inoxydable incorporant une céramique structurée en forme de nids d'abeilles qui permet la conversion des gaz d'échappement en substances inertes pour l'environnement.

Cette céramique est souvent composée de cordiérite ($2MgO.2Al_2O_3.5SiO_2$) ou d'alumine, généralement recouverte d'un oxyde mixte à base de cérium et de zirconium pouvant contenir d'autres éléments dopants en faible concentration (par exemple : Th, Zr, Si, Y, La, Sc, Al, Ca, Mg, etc.), sur lequel sont dispersées de fines particules de métaux nobles appartenant généralement à la famille des platinoïdes (par exemple : Rh, Pt, Pd) [1,2]. On notera que le support peut également être de nature métallique dans certains cas [3].

En moyenne, chaque catalyseur peut contenir de 1 à 15 g de platinoïdes en fonction de la taille et du type de véhicule [4,5].

La demande croissante de catalyseurs performants pour l'automobile couplée au développement des pays à fortes croissances démographique et économique font que le prix de ces métaux de la famille des platinoïdes est en constante hausse et que leur recyclage représente aujourd'hui une alternative économiquement viable. Cependant, le taux de recyclage des platinoïdes est encore très faible et seulement 20% du Pt utilisé mondialement est issu du retraitement (6% pour le Pd, et 12% pour le Rh) [3].

Industriellement, on distingue deux procédés principaux de retraitement appliqués au recyclage des catalyseurs des pots catalytiques automobiles [3,4,6,7], à savoir les procédés hydrométallurgiques et les procédés pyrométallurgiques.

Les procédés pyrométallurgiques :

Ces procédés consistent à mélanger la céramique du catalyseur broyée à un agent fondant, tel que CaO ou MgO, auquel on ajoute un métal collecteur, tel que le fer ou le cuivre, à haute température (1500-1650°C), ce qui va permettre de fixer et concentrer les particules de métaux nobles [3,4,7,8].

Les métaux précieux sont ensuite récupérés et séparés par un procédé hydrométallurgique classique utilisant de l'eau régale.

Ces procédés permettent d'obtenir des rendements importants, mais souffrent d'inconvénients liés d'une part aux équipements spécifiques qui sont requis afin de résister à la corrosion, et d'autre part aux consommations énergétiques élevées nécessaires pour faire fonctionner ces équipements avec des températures et des durées de traitement importantes [4,6,7].

Les procédés hydrométallurgiques :

Plus rarement utilisés, ces procédés dépendent fortement du type de support, par exemple en alumine ou en métal, sur lequel est déposé l'oxyde de terres rares tel que l'oxyde de cérium. Ces procédés nécessitent l'emploi d'agents de lixiviation puissants tels que les chlorures, les chlorates, l'eau oxygénée, les bromures, l'eau régale, les nitrates, etc., afin de dissoudre sélectivement le support et/ou les platinoïdes.

Une fois transformés en complexes chlorés ($MCl_6^{2-}$), lorsque l'agent de lixiviation comporte du chlore, les métaux nobles peuvent être extraits après concentration de la solution initiale [3,4,7].

Les fortes quantités de réactifs corrosifs et de produits chimiques employées génèrent de grands volumes d'effluents toxiques à traiter.

De façon générale, les procédés décrits dans ce qui précède sont fortement énergivores, requièrent de longues durées de fonctionnement, et génèrent de grandes quantités d'effluents toxiques pour l'homme et l'environnement.

En conséquence, le recyclage des catalyseurs comprenant un support en un oxyde de terre rare et des particules d'un métal noble, bien qu'il soit économiquement intéressant du fait de la valeur intrinsèque du métal, reste cependant très complexe et très difficile à réaliser, du fait des inconvénients environnementaux, techniques et économiques que présentent les procédés de retraitement actuels.

Par ailleurs, les procédés décrits plus haut n'ont pour but que le recyclage des métaux nobles et ne permettent pas la récupération et le recyclage des terres rares du support telles que le cérium.

A titre d'exemple, chaque pot catalytique monté sur un véhicule de taille classique contient en moyenne 80 g d'oxyde de cérium [5], et actuellement, le recyclage du cérium contenu dans les catalyseurs utilisés dans l'industrie automobile n'est pas effectué.

Or, le recyclage des terres rares, telle que le cérium, en plus du recyclage des métaux nobles pourrait présenter un très grand intérêt, notamment économique.

En effet, le prix du cérium était de moins de 20 $ par kg en 2006, et il a atteint 80 $ par kg à la fin 2011 [5].

En outre, le recyclage des terres rares telles que le cérium permettrait de réduire grandement la quantité de déchets rejetés lors des procédés de retraitement des catalyseurs, et d'en diminuer l'impact sur l'environnement.

L'oxyde de cérium, tout comme les oxydes d'autres terres rares reste néanmoins un matériau réfractaire difficile à dissoudre nécessitant des conditions expérimentales drastiques combinant l'emploi d'acides concentrés et de fortes températures.

Le document [9] a trait à la dissolution catalytique de la cérine ($CeO_2$) dans des conditions douces. Plus exactement, ce document décrit la dissolution réductrice de la cérine dans des solutions faiblement acides, catalysée par des nanoparticules de platine.

Les solutions acides utilisées sont des mélanges d'acide nitrique, d'acide formique et de nitrate d'hydrazinium ($[N_2H_5][NO_3]$), d'acide nitrique et de nitrate d'hydrazinium ($[N_2H_5][NO_3]$), ou d'acide sulfurique et d'acide formique.

La vitesse de dissolution de l'oxyde de cérium observée dans ce document est très lente.

De plus une dissolution totale de l'oxyde n'est pas obtenue.

En outre l'hydrazine qui est utilisée dans le document [9] pour la préparation du nitrate d'hydrazinium est un composé qui a été récemment classé « CMR ».

Enfin la dissolution d'oxydes mixtes tels que (Ce, Zr)$O_2$ et (Ce, Tb)$O_2$ n'est ni mentionnée, ni évoquée, ni suggérée dans ce document.

Il existe donc, au regard de ce qui précède, un besoin pour un procédé de séparation des composants d'un substrat solide comprenant un support en au moins un oxyde choisi parmi les oxydes d'un premier métal choisi parmi les terres rares, les oxydes mixtes du premier métal et d'au moins un deuxième métal différent du premier métal, et les mélanges d'un oxyde d'un premier métal et d'au moins un oxyde d'au moins un deuxième métal, ledit support comprenant au moins une surface sur laquelle sont déposées des particules constituées par au moins un métal noble, qui permette de séparer et de récupérer non seulement le métal noble qui constitue les particules, mais aussi le premier métal, et le deuxième métal éventuel.

Il existe encore un besoin pour un tel procédé qui puisse être avantageusement réalisé dans des conditions douces, c'est-à-dire notamment à des températures, concentrations et pressions modérées, dans des durées limitées, et avec une consommation énergétique réduite.

Il existe enfin un besoin pour un tel procédé qui soit respectueux de l'environnement, notamment en mettant en oeuvre des composés non toxiques et en générant de faibles quantités de déchets également non toxiques et facilement dégradables.

## EXPOSÉ DE L'INVENTION

Ce but, et d'autres encore, sont atteints, conformément à l'invention, par un procédé de traitement d'un substrat solide comprenant un support comprenant, de préférence constitué par, au moins un oxyde choisi parmi les oxydes d'un premier métal choisi parmi les terres rares, les oxydes mixtes d'un premier métal choisi parmi les terres rares et d'au moins un deuxième métal différent du premier métal, et les mélanges d'un oxyde d'un premier métal choisi parmi les terres rares et d'au moins un oxyde d'au moins un deuxième métal différent du premier métal, ledit support comprenant au moins une surface sur laquelle sont déposées des particules constituées par au moins un métal noble, afin de séparer le premier métal, le deuxième métal éventuel, et le métal noble qui constitue les particules, ledit procédé comprenant une étape de dissolution sélective du support, au cours de laquelle on met en contact le substrat avec une solution de dissolution comprenant au moins un acide minéral et au moins un agent réducteur de la terre rare ou des terres rares du support, moyennant quoi on obtient une solution contenant le premier métal et le deuxième métal éventuel (tous deux) à l'état dissous, dans laquelle se trouvent en suspension les particules constituées par le métal noble ; caractérisé en ce que l'agent réducteur de la terre rare ou des terres rares du support est choisi parmi les molécules naturelles anti-oxydantes choisies parmi l'acide ascorbique, le catéchol, l'acide gallique, et leurs mélanges.

Avantageusement, le premier métal est choisi parmi le cérium, le praséodyme, et le terbium.

Avantageusement, le deuxième métal est choisi parmi les terres rares telles que le cérium, le praséodyme, l'ytterbium, le samarium, le terbium, et l'europium ; et le zirconium.

Avantageusement, l'oxyde est choisi parmi l'oxyde de cérium $CeO_2$ ; les oxydes mixtes de cérium et d'au moins une autre terre rare tels que les oxydes mixtes de cérium et de terbium, et les oxydes mixtes de cérium et de zirconium ; et les mélanges d'oxyde de cérium et d'au moins un oxyde d'une autre terre rare tels que les mélanges d'oxyde de cérium et d'oxyde de terbium.

Avantageusement, le métal noble est choisi parmi les platinoïdes tels que le platine, le palladium, le rhodium, le ruthénium, l'iridium, l'osmium, et le rhénium ; l'or ; et leurs alliages.

Avantageusement, la solution de dissolution est une solution aqueuse, notamment lorsque l'agent réducteur est l'acide ascorbique, ou une solution hydro-alcoolique.

Avantageusement, la concentration en acide minéral est de 0,1 M à 5 M (mol.L$^{-1}$), de préférence de 0,1 M à 3 M, par exemple de 0,5 M à 2 M, et la concentration en agent réducteur est de 0,1 M à sa limite de solubilité en solution, par exemple 0,5 M.

Avantageusement, l'acide minéral est choisi parmi l'acide nitrique, l'acide sulfurique, l'acide chlorhydrique et leurs mélanges.

L'acide sulfurique est préféré.

En effet, de manière surprenante, il a été montré (voir exemples) que la nature de l'acide minéral de la solution de dissolution joue aussi un rôle sur les vitesses de dissolution, et que de meilleurs résultats sont obtenus avec une solution de dissolution contenant de l'acide sulfurique en tant qu'acide minéral, plutôt qu'avec une solution de dissolution contenant de l'acide nitrique en tant qu'acide minéral.

En outre, de manière étonnante, on a montré (voir exemples) que les vitesses de dissolution augmentent de manière significative avec la concentration en protons dans le milieu, à savoir avec l'acidité de la solution, et ce, pour une même concentration initiale en agent réducteur tel que l'acide ascorbique.

Dans le cas de l'acide nitrique la concentration en acide de la solution de dissolution est généralement de 0 ,1 à 3,0 M (mol.L$^{-1}$), de présence de 1,0 à 3,0 M, de préférence encore de 2,0 à 3,0 M, par exemple de 3M.

Dans le cas de l'acide sulfurique la concentration en acide de la solution de dissolution est généralement de 0,1 à 0,5 M (mol.L$^{-1}$), de préférence de 0,25 à 0,5 M, par exemple de 0,5 M.

De préférence, la solution de dissolution comprend de l'acide sulfurique ou de l'acide nitrique, et de l'acide ascorbique, de préférence encore, la solution de dissolution comprend de de l'acide sulfurique et de l'acide ascorbique.

Avantageusement, la mise en contact du substrat avec la solution de dissolution est réalisée à une température de 10°C à 50°C, par exemple de 20°C à 40°C, notamment 25°C, et à la pression atmosphérique.

Avantageusement, la mise en contact du substrat avec la solution de dissolution est réalisée pendant une durée de 5 min à 12 h, de préférence de 15 min à 120 min.

L'oxyde peut avoir une surface spécifique de 4 m$^2$.g$^{-1}$ à 250 m$^2$.g$^{-1}$.

Le procédé selon l'invention peut en effet être mis en oeuvre avec succès avec une très large gamme de surfaces spécifiques de l'oxyde et y compris avec des oxydes frittés.

Les particules de métal noble peuvent représenter de 0,5 à 5% en masse de la masse du substrat solide.

Avantageusement, lors de l'étape de dissolution, et simultanément à la mise en contact, on soumet le substrat et/ou la solution de dissolution à une action mécanique.

L'action mécanique peut être choisie parmi une ou plusieurs parmi une agitation, une turbulence, un cisaillement, une action électromécanique, et une action ultrasonique.

Avantageusement, à l'issue de l'étape de dissolution sélective du support, on sépare par une technique de séparation solide-liquide, telle que la filtration ou la centrifugation, les particules constituées par le métal noble en suspension à partir de la solution contenant le premier métal et le deuxième métal éventuel à l'état dissous.

Le substrat solide peut être un catalyseur de traitement des gaz d'échappement de véhicules automobiles, un élément de pile à combustible, ou un catalyseur industriel utilisé notamment en synthèse organique.

Le procédé selon l'invention n'a jamais été décrit ni suggéré dans l'art antérieur.

En particulier, le procédé selon l'invention est caractérisé par le fait qu'il comprend une étape de dissolution sélective du support, au cours de laquelle on met en contact le substrat avec une solution de dissolution spécifique comprenant au moins un acide minéral et au moins un agent réducteur de la terre rare ou des terres rares (dans le cas où le deuxième métal est aussi une terre rare) spécifique, moyennant quoi on obtient une solution contenant le premier métal et le deuxième métal éventuel à l'état dissous, dans laquelle se trouvent en suspension les particules constituées par le métal noble.

Selon l'invention la solution de dissolution spécifique mise en oeuvre est principalement caractérisée par le fait que l'agent réducteur de la terre rare ou des terres rares du support est spécifiquement choisi parmi les molécules naturelles anti-oxydantes choisies parmi l'acide ascorbique, le catéchol, l'acide gallique, et leurs mélanges.

La mise en oeuvre d'une telle solution de dissolution spécifique, comprenant un tel agent réducteur spécifique, pour dissoudre sélectivement un tel support, lui aussi spécifique, sur lequel sont déposées des particules de métaux nobles n'est ni décrite ni suggérée dans l'art antérieur, et notamment dans le document [9]. En effet, dans ce document on utilise du nitrate d'hydrazinium et/ou de l'acide formique en tant qu'agent réducteur.

La solution de dissolution spécifique mise en oeuvre dans le procédé selon l'invention met en oeuvre une espèce réductrice spécifique qui permet la réduction du premier métal, par exemple du Ce(IV), qui se trouve sous la forme d'un oxyde non soluble en une forme ionique soluble de ce premier métal, par exemple Ce(III), en présence d'un acide minéral qui apporte l'acidité nécessaire pour la dissolution de l'oxyde.

On peut estimer que, dans la solution de dissolution, l'espèce réductrice spécifique et l'acide minéral forment une véritable combinaison synergique qui, notamment, permet de dissoudre sélectivement, quantitativement, et avantageusement dans des conditions douces, en particulier de température et de pression, le support en oxyde.

Selon l'invention, l'espèce réductrice est une molécule naturelle anti-oxydante, et de préférence, l'espèce réductrice est l'acide ascorbique qui est une molécule naturelle, peu onéreuse, ayant des propriétés anti-oxydantes, compatible avec l'environnement et qui est conforme à la Directive REACH (Reach, Annexe IV : exemption de l'obligation d'enregistrement conformément à l'article 2, paragraphe 7, point a).

La dissolution du support lors de cette étape de dissolution est complète et quantitative, ce qui signifie que la totalité des oxydes de métaux qui constituent le support initial sont dissous et se retrouvent en solution sous la forme d'ions métalliques de ces métaux.

Les solutions de dissolution spécifiques selon l'invention et, de nouveau, essentiellement du fait de l'utilisation, dans la solution de dissolution de l'invention d'un agent réducteur de la terre rare ou des terres rares du support spécifiquement choisi parmi les molécules naturelles anti-oxydantes choisies parmi l'acide ascorbique, le catéchol, l'acide gallique, et leurs mélanges, et en particulier l'acide ascorbique, assurent en effet une dissolution totale du support, par exemple en $CeO_2$, en quelques minutes.

Une dissolution totale n'est pas obtenue avec les solutions de dissolution du document [9] qui contiennent du nitrate d'hydrazinium et/ou de l'acide formique en tant qu'agent réducteur, et non pas un agent réducteur choisi parmi les molécules naturelles anti-oxydantes choisies parmi l'acide ascorbique, le catéchol, et l'acide gallique.

Cette dissolution est en outre sélective, ce qui signifie que les particules de métaux nobles ne sont pas dissous par cette solution de dissolution et se trouvent donc en suspension dans la solution obtenue et peuvent ensuite être facilement séparées de cette solution puis recyclées.

L'étape de dissolution selon l'invention présente généralement l'avantage d'être réalisée dans des conditions douces, à savoir à la pression atmosphérique et à des températures modérées telles que les températures précisées plus haut.

L'étape de dissolution selon l'invention présente aussi généralement l'avantage d'être de courte durée, par exemple de la durée indiquée plus haut.

Autrement dit, les vitesses de dissolution obtenues avec le procédé selon l'invention sont très rapides, et cela essentiellement du fait de l'utilisation, dans la solution de dissolution de l'invention d'un agent réducteur de la terre rare ou des terres rares du support spécifiquement choisi parmi les molécules naturelles anti-oxydantes choisies parmi l'acide ascorbique, le catéchol, l'acide gallique, et leurs mélanges.

Ces vitesses de dissolution sont notamment bien plus élevées que les vitesses de dissolution obtenues avec les solutions de dissolution du document [9] qui contiennent du nitrate d'hydrazinium et/ou de l'acide formique en tant qu'agent réducteur.

Il a été effectivement montré (voir les exemples) que d'excellent résultats en termes de dissolution, et notamment des vitesses de dissolution très rapides, sont obtenues avec les solutions de dissolution selon l'invention, quel que soit l'acide minéral contenu dans la solution, tel que l'acide sulfurique ou l'acide nitrique, et quel que soit l'agent réducteur tel que l'acide ascorbique, le catéchol ou l'acide gallique (voir exemples).

Les meilleurs résultats en termes de dissolution, et notamment les vitesses de dissolution les plus rapides, sont obtenus avec les solutions de dissolution qui contiennent de l'acide sulfurique en tant qu'acide minéral, et avec les solutions qui contiennent de l'acide ascorbique en tant qu'agent réducteur (voir exemples).

Des résultats encore meilleurs sont obtenus de manière étonnante avec les solutions de dissolution qui contiennent une combinaison d'acide sulfurique et d'acide ascorbique.

Dans tous les cas, il a été effectivement montré qu'avec les solutions de dissolution de l'invention de biens meilleurs résultats en termes de dissolution, et notamment des vitesses de dissolution beaucoup plus rapides, sont obtenus par rapport aux solutions de dissolution du document [9] qui contiennent du nitrate d'hydrazinium et/ou de l'acide formique en tant qu'agent réducteur.

On pourra à cet égard se référer aux résultats exposés dans les exemples donnés à la fin de la présente description et les comparer aux résultats exposés dans les Tableaux 1 et 2 du document [9].

De plus, de manière étonnante, il a été montré (voir exemples) que les avantages énumérés plus haut, de l'étape de dissolution du procédé selon l'invention, sont présentés quel que soit l'oxyde du support, qu'il s'agisse d'un oxyde simple mais aussi de manière encore plus surprenante d'un oxyde mixte ou d'un mélange d'oxydes.

Ainsi, dans le cas où l'oxyde d'un premier métal est l'oxyde de cérium, on peut considérer que la dissolution de l'oxyde de cérium du support est l'étape clé qui permet la séparation et/ou la dissolution des autres éléments du substrat.

Lorsque d'autres éléments sont intimement mélangés à l'oxyde de cérium, il a été montré à l'aide de deux exemples d'oxydes mixtes -$(Ce_{0,8}Tb_{0,2})O_2$ et $(Ce_{0,75}Zr_{0,25})O_2$- que la totalité des éléments constituant le support pouvait être dissoute rapidement.

La dissolution passe par la réduction sélective du $Ce(IV)O_2$ en $Ce(III)$. Le départ du cérium de la matrice cristalline formant le support implique la fragilisation du réseau cristallin et la solubilisation des autres éléments.

Ainsi, de nombreux autres éléments, généralement sous la forme d'oxydes, peuvent être incorporés en différentes proportions dans l'oxyde de cérium.

Il est à noter que dans le cas du $(Ce_{0,8}Tb_{0,2})O_2$, la réduction du Ce est également accompagnée de la réduction du $Tb(IV)O_2$ en $Tb(III)$.

L'étape de dissolution du procédé selon l'invention, et plus généralement le procédé selon l'invention, peut s'appliquer avec succès non seulement aux supports en oxyde de cérium, mais aussi aux supports constitués d'autres oxydes de terres rares pouvant exister sous plusieurs valences comme le praséodyme ou le terbium.

Cependant, ces éléments, mais également d'autres terres rares ainsi que le zirconium, peuvent être dilués dans l'oxyde de cérium et le support est alors constitué par un oxyde mixte, tel que $(Ce,Tb)O_2$ ou $(Ce,Zr)O_2$.

Le procédé selon l'invention est également mis en oeuvre avec succès avec de tels supports en oxyde mixte.

Si le métal dilué dans l'oxyde de cérium fait partie de la première liste préalablement définie (praséodyme, terbium), sa concentration dans l'oxyde peut atteindre les pôles purs.

Si le métal dilué dans l'oxyde de cérium fait partie de la seconde liste préalablement définie (ytterbium, samarium, europium, zirconium), on peut considérer un pourcentage de cet élément par rapport au cérium allant de 0 à 50%, de préférence de plus de 0 à 50%.

Il est cependant important de remarquer que l'oxyde de cérium représente le cas le plus industriellement intéressant dans le sens où dans la majorité des cas, il est l'élément principal, de préférence majoritaire, de l'oxyde.

Les autres éléments (autres que le $CeO_2$), que l'on pourrait appeler dans certains cas éléments dopants, sont utilisés de façon diluée dans la matrice de $CeO_2$. Par exemple, il est décrit dans la littérature que la présence de cations (par exemple Th, Zr, Si, La, Y, Sc, etc.), généralement sous la forme d'oxydes en concentration relativement basse (par exemple 0,5-10 mol%) a été étudiée afin d'améliorer la stabilité thermique de la matrice $CeO_2$ dans les catalyseurs d'automobile. Il apparaît en revanche que Zr peut être utilisé en plus forte concentration dans ces mêmes matrices, par exemple de 0 à 50% de préférence plus de 0 à 50% [1,2].

Finalement, on peut dire que le procédé selon l'invention est efficace, et peut être mis en oeuvre avec succès en permettant notamment une dissolution quantitative et sélective par de nombreux acides minéraux, de nombreuses espèces réductrices, dans de larges gammes de pH, de températures, et de concentrations en acide et en espèce réductrice, pour une large gamme de compositions et de surfaces spécifiques des oxydes du support et pour une large gamme de métaux nobles (par exemple : platine, rhodium, palladium, iridium, ruthénium, rhénium, osmium, or, etc.), ou d'alliages de métaux nobles.

Le procédé selon l'invention permet pour la première fois de séparer et de récupérer non seulement le métal noble qui constitue les particules, mais aussi le premier métal, et le deuxième métal éventuel, et cela, avantageusement, dans des conditions douces c'est-à-dire notamment à des températures, concentrations et pressions modérées, et dans des durées limitées.

En effet, dans le procédé selon l'invention, la dissolution complète de l'oxyde du support, par exemple à base de cérium permet ensuite de séparer facilement, par exemple par centrifugation ou filtration, les particules qui ne sont pas, quant à elles, affectées par le mélange de dissolution spécifique selon l'invention et se trouvent donc en suspension, puis de les récupérer et de les recycler.

Comme on l'a indiqué plus haut, le procédé selon l'invention utilise des composés non toxiques, au contraire de l'hydrazine, et génère de la même manière des déchets non toxiques et facilement dégradables ou recyclables.

L'invention sera mieux comprise à la lecture de la description détaillée qui suit, donnée à titre illustratif et non limitatif qui apporte des précisions sur plusieurs aspects de l'invention.

Cette description détaillée est faite notamment en relation avec des modes de réalisation particuliers de l'invention sous la forme d'exemples.

Cette description détaillée est également faite en relation avec les dessins joints.

## BRÈVE DESCRIPTION DES DESSINS

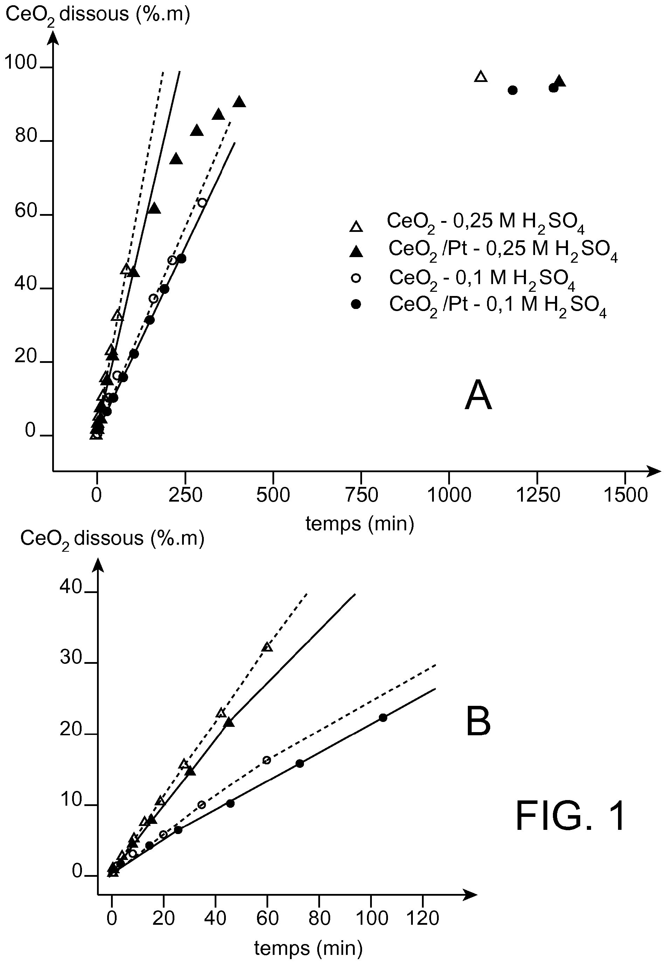

- La Figure 1 (A,B) est un graphique qui donne les cinétiques de dissolution de $CeO_2$ et $CeO_2$/Pt (2.5%.m) (15 $m^2.g^{-1}$) obtenues à température ambiante (TA, RT) en présence d'acide ascorbique (AA) 0,5 M et d'acide sulfurique à 0,25 M et 0,1 M (Exemple 1).
  La Figure 1B est un agrandissement du graphique de la Figure 1A aux temps courts.
  Les lignes en pointillés sont des guides pour les yeux et représentent les vitesses initiales de dissolution.
  En ordonnée est porté le % en masse d'oxyde dissous, et en abscisse est porté le temps (en min.).
  Les points $\triangle$ sont pour la dissolution de $CeO_2$ avec de l'acide sulfurique 0,25 M.
  Les points $\blacktriangle$ sont pour la dissolution de $CeO_2$/Pt avec de l'acide sulfurique 0,25 M.
  Les points $\bigcirc$ sont pour la dissolution de $CeO_2$ avec de l'acide sulfurique 0,1 M.
  Les points $\bullet$ sont pour la dissolution de $CeO_2$/Pt avec de l'acide sulfurique 0,1 M.

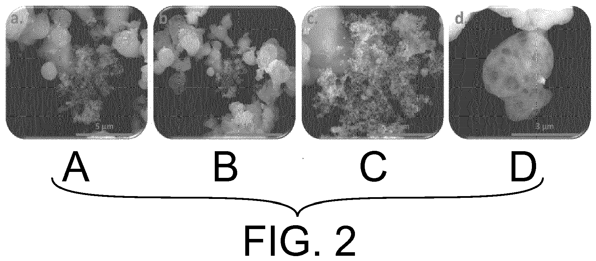

- La Figure 2 (A, B, C, D) montre des images MEB mettant en évidence l'agrégation de particules de Pt après dissolution (A, B, C) (Exemple 1) ainsi que l'état avancé de la dissolution des grains de $CeO_2$ résiduels (D).
  La dissolution est réalisée dans les conditions opératoires suivantes : 178 mg de $CeO_2$/Pt, 50 mL Acide Ascorbique (AA) 0,5 M / $H_2SO_4$ 0,1 M, TA.
  L'échelle portée sur la Figure 2A représente 5 $\mu$m.
  L'échelle portée sur la Figure 2B représente 10 $\mu$m.
  L'échelle portée sur la Figure 2C représente 3 $\mu$m.
  L'échelle portée sur la Figure 2D représente 3 $\mu$m.

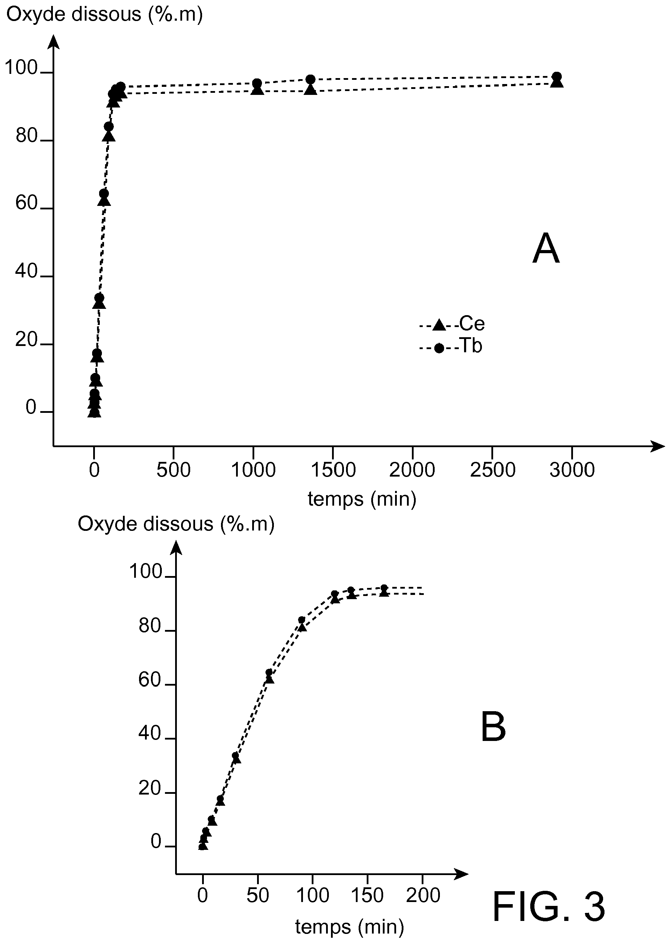

- La Figure 3 (A, B) est un graphique qui donne la cinétique de dissolution de $(Ce_{0,8}Tb_{0,2})O_2$ (30 $m^2.g^{-1}$) en présence d'acide ascorbique (AA) 0,5 M et d'acide sulfurique 0,4 M (Exemple 2).
  La Figure 3B est un agrandissement du graphique de la Figure 3A aux temps courts.
  Les lignes en pointillés sont des guides pour les yeux.
  La dissolution est réalisée dans les conditions opératoires suivantes : 185 mg de $(Ce_{0,8}Tb_{0,2})O_2$, 50 mL AA 0,5 M / $H_2SO_4$ 0,4 M, TA.
  En ordonnée est porté le % en masse d'oxyde dissous, et en abscisse est porté le temps (en min.).
  Les points $\blacktriangle$ montrent le % en masse d'oxyde de cérium dissous c'est-à-dire le % en masse de cérium en solution.
  Les points $\bullet$ montrent le % en masse d'oxyde de terbium dissous c'est-à-dire le % en masse de terbium en solution.

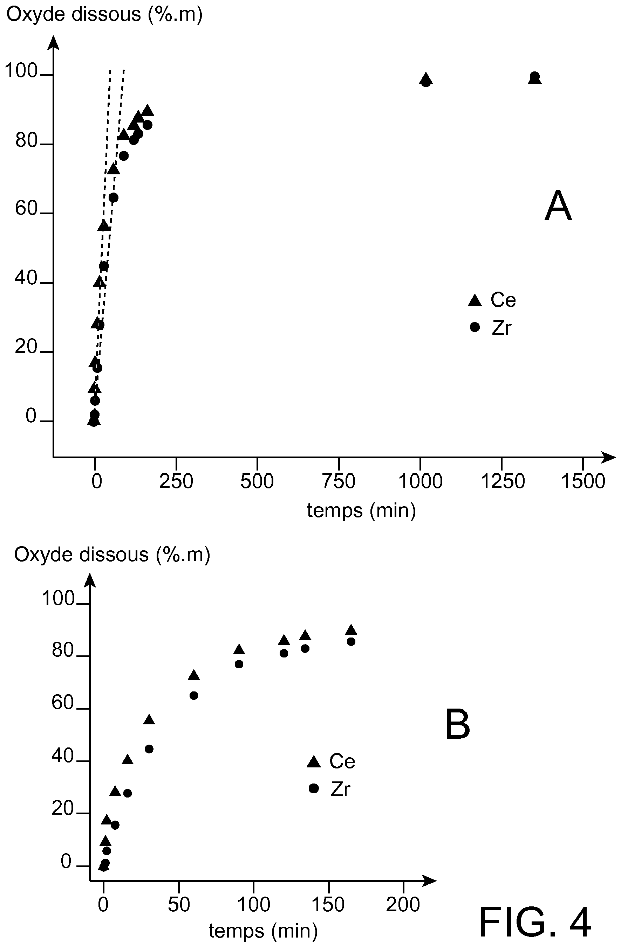

  Les Figures 4 (A,B), 5 (A,B), et 6 (A,B) présentent des graphiques qui donnent les cinétiques de dissolution de $(Ce_{0,75}Zr_{0,25})O_2$ (154 $m^2.g^{-1}$) en présence d'acide ascorbique (AA) 0,5 M et d'acide sulfurique 0,4 M (4 (A,B)), et les cinétiques de dissolution de $(Ce_{0,75}Zr_{0,25})O_2$ en présence d'acide ascorbique (AA) 0,5 M et d'acide sulfurique à différentes concentrations (0,5 M ; 0,4 M ; 0,25 M ; 0,2 M) (5 (A,B) ; 6 (A, B)) rapportées par rapport au Ce et au Zr, respectivement (Exemple 3).
  Les Figures 4B, 5B, et 6B sont des agrandissements des figures 4A, 5A et 6A aux temps courts.
  La dissolution est réalisée dans les conditions opératoires suivantes : ~180 mg de $(Ce_{0,75}Zr_{0,25})O_2$, 50 mL Acide Ascorbique (AA) 0,5 M / $H_2SO_4$, concentrations indiquées plus haut, TA.
  Les lignes en pointillés sont des guides pour les yeux.
  En ordonnée est porté le % en masse d'oxyde dissous, et en abscisse est porté le temps (en min.).
  Sur la Figure 4 (A,B) : Les points $\blacktriangle$ montrent le % en masse d'oxyde de cérium dissous c'est-à-dire le % en masse de cérium en solution.
  Les points $\bullet$ montrent le % en masse d'oxyde de zirconium dissous c'est-à-dire le % en masse de zirconium en solution.
  Sur la Figure 5 (A,B) : Les points $\nabla$ montrent le % en masse d'oxyde de cérium dissous c'est à dire le % en masse de cérium en solution, lors d'une dissolution réalisée avec de l'acide sulfurique 0,5 M.
  Les points $\triangle$ montrent le % en masse d'oxyde de cérium dissous c'est à dire le % en masse de cérium en solution

lors d'une dissolution réalisée avec de l'acide sulfurique 0,4 M.

Les points ○ montrent le % en masse d'oxyde de cérium dissous c'est à dire le % en masse de cérium en solution lors d'une dissolution réalisée avec de l'acide sulfurique 0,25 M.

Les points □ montrent le % en masse d'oxyde de cérium dissous c'est à dire le % en masse de cérium en solution lors d'une dissolution réalisée avec de l'acide sulfurique 0,2M.

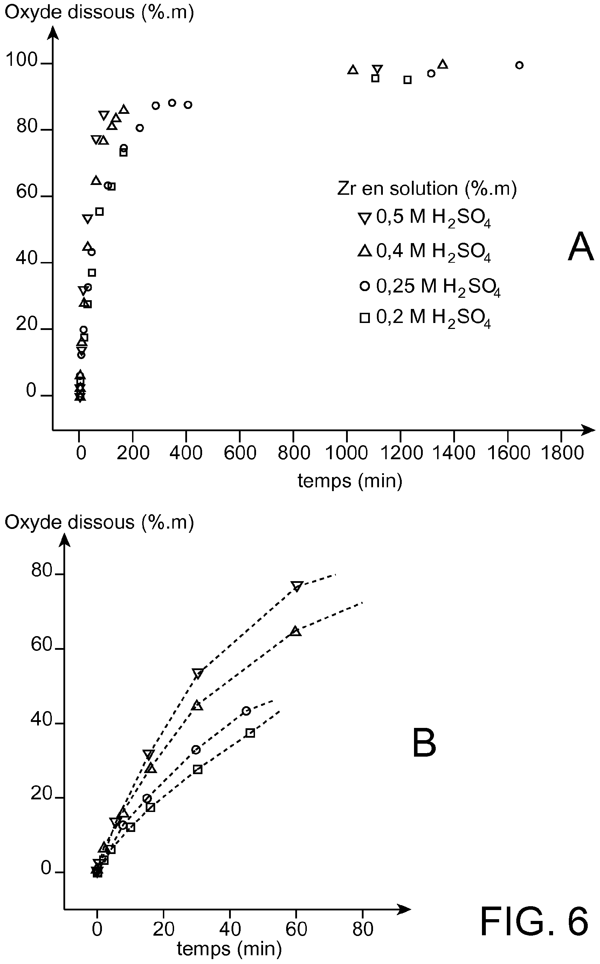

Sur la Figure 6 (A,B) : Les points ∇ montrent le % en masse d'oxyde de zirconium dissous c'est à dire le % en masse de zirconium en solution, lors d'une dissolution réalisée avec de l'acide sulfurique 0,5 M.

Les points Δ montrent le % en masse d'oxyde de zirconium dissous c'est à dire le % en masse de zirconium en solution lors d'une dissolution réalisée avec de l'acide sulfurique 0,4 M.

Les points ○ montrent le % en masse d'oxyde de zirconium dissous c'est à dire le % en masse de zirconium en solution lors d'une dissolution réalisée avec de l'acide sulfurique 0,25 M.

Les points □ montrent le % en masse d'oxyde de zirconium dissous c'est à dire le % en masse de zirconium en solution lors d'une dissolution réalisée avec de l'acide sulfurique 0,2 M.

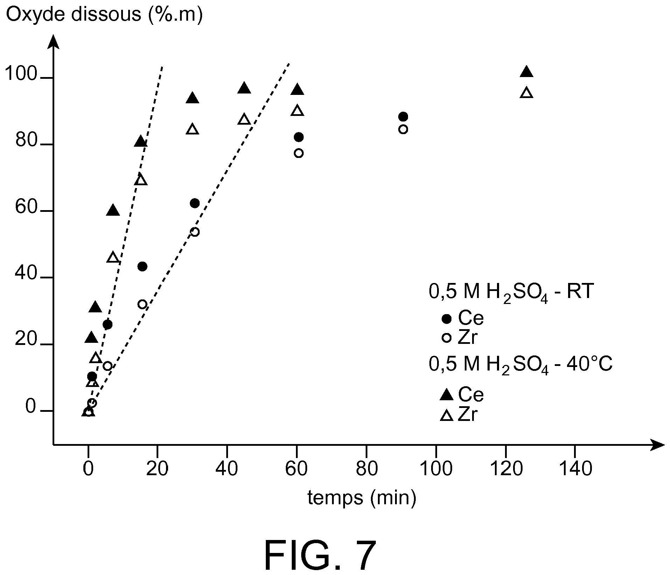

- La Figure 7 est un graphique qui montre l'effet de la température sur la cinétique de dissolution de $(Ce_{0,75}Zr_{0,25})O_2$ ($154\ m^2.g^{-1}$) en fonction du temps (Exemple 4).

La dissolution est réalisée dans les conditions opératoires suivantes :

~180 mg de $(Ce_{0,75}Zr_{0,25})O_2$, 50 mL AA 0,5 M / $H_2SO_4$ 0,5 M, TA ou 40°C.

Les lignes en pointillés représentent les vitesses initiales de dissolution observées pour Zr dans les deux conditions.

En ordonnée est porté le % en masse d'oxyde dissous, et en abscisse est porté le temps (en min.).

Les points ● montrent le % en masse d'oxyde de cérium dissous c'est à dire le % en masse de cérium en solution, lors d'une dissolution réalisée avec un mélange d'acide sulfurique 0,5 M et d'acide ascorbique 0,5M à température ambiante (TA, RT).

Les points ○ montrent le % en masse d'oxyde de zirconium dissous c'est à dire le % en masse de zirconium en solution, lors d'une dissolution réalisée un mélange d'acide sulfurique 0,5 M et d'acide ascorbique 0,5M à température ambiante (TA, RT).

Les points ▲ montrent le % en masse d'oxyde de cérium dissous c'est à dire le % en masse de cérium en solution, lors d'une dissolution réalisée avec un mélange d'acide sulfurique 0,5 M et d'acide ascorbique 0,5M à 40°C.

Les points Δ montrent le % en masse d'oxyde de zirconium dissous c'est à dire le % en masse de zirconium en solution, lors d'une dissolution réalisée avec un mélange d'acide sulfurique 0,5 M et d'acide ascorbique 0,5M à 40°C.

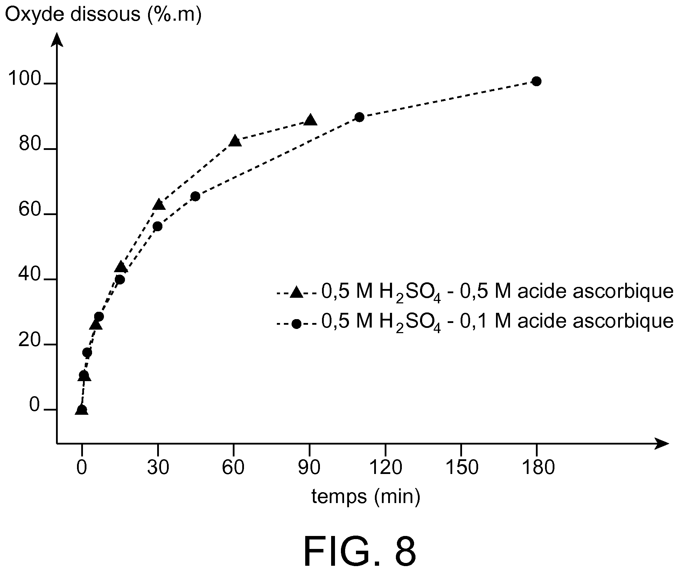

- La Figure 8 est un graphique qui donne la cinétique de dissolution de $(Ce_{0,75}Zr_{0,25})O_2$ (par rapport à Ce) réalisée en milieu sulfurique 0,5 M en présence d'acide ascorbique 0,5 M (▲) ou 0,1 M (●) (Exemple 5).

La dissolution est réalisée dans les conditions opératoires suivantes :

~180 mg de $(Ce_{0,75}Zr_{0,25})O_2$ ($154\ m^2.g^{-1}$), 50 mL AA / $H_2SO_4$ 0,5 M, TA.

Les pointillés sont des guides pour les yeux.

En ordonnée est porté le % en masse d'oxyde dissous, et en abscisse est porté le temps (en min.).

Les points ▲ montrent le % en masse d'oxyde de cérium dissout c'est à dire le % en masse de cérium en solution, lors d'une dissolution réalisée avec de l'acide sulfurique 0,5 M et de l'acide ascorbique 0,5 M.

Les points ● montrent le % en masse d'oxyde de cérium dissous c'est à dire le % en masse de cérium en solution, lors d'une dissolution réalisée avec de l'acide sulfurique 0,5 M et de l'acide ascorbique 0,1 M.

## EXPOSÉ DÉTAILLÉ DE MODES DE RÉALISATION PARTICULIERS

Le procédé de traitement de l'invention est un procédé de traitement d'un substrat solide comprenant un support en au moins un oxyde.

Il n'existe aucune limitation quant à la forme du support et donc du substrat solide qui peut être traité par le procédé selon l'invention.

Le support peut se présenter sous la forme d'une pluralité de particules discrètes mais il se présente plutôt généralement sous la forme d'une poudre ou d'un substrat massif.

Le procédé selon l'invention permet de traiter des supports présentant des formes complexes avec par exemple des reliefs, cavités, et autres ; tels que les supports de catalyseur.

Le support peut être poreux.

Ainsi, l'oxyde du support peut avoir une surface spécifique de 4 $m^2.g^{-1}$ à 250 $m^2.g^{-1}$.

Il n'existe également aucune limitation quant à la taille du support et donc du substrat solide qui peut être traité par le procédé selon l'invention.

L'oxyde du support a déjà été décrit plus haut.

Les particules peuvent toutes être constituées par un seul métal noble ou un alliage de métaux nobles ou bien les particules peuvent comprendre plusieurs familles de particules, les particules de chacune de ces familles étant constituées par un métal ou alliage de métaux nobles différents.

Le métal noble est généralement choisi parmi les platinoïdes tels que platine, le palladium, le rhodium, le ruthénium, l'iridium, le rhénium, et l'osmium ; l'or ; et leurs alliages.

Les particules de métal noble sont généralement des nanoparticules, d'une taille, par exemple d'un diamètre, de 1 à 500 nm, par exemple de 1 à 100 nm.

Les particules de métal noble peuvent représenter de 0,5 à 5% en masse de la masse du substrat solide.

Ces particules sont généralement dispersées de manière discrète sur au moins une surface externe, exposée du support.

La solution de dissolution a déjà été décrite en détail plus haut.

Avantageusement, la solution de dissolution est une solution aqueuse ou une solution hydro-alcoolique.

Par solution aqueuse on entend une solution dont le solvant est constitué par de l'eau.

Par solution hydro-alcoolique, on entend une solution dont le solvant est un mélange d'eau et d'un alcool, généralement l'éthanol, en toutes proportions.

Le mélange hydro-alcoolique permet la solubilisation de certains agents réducteurs tels que l'acide gallique.

Lorsque l'agent réducteur est de l'acide ascorbique le solvant est de l'eau (pure).

Les composants de la solution de dissolution, à savoir l'acide minéral et l'agent réducteur, leurs concentrations ont déjà été décrites plus haut ainsi que les conditions de la mise en contact du substrat avec la solution de dissolution.

A l'issue de l'étape de dissolution sélective du support, on sépare par une technique de séparation solide-liquide, telle que la filtration ou la centrifugation, les particules constituées par le métal noble en suspension à partir de la solution contenant le premier métal et le deuxième métal éventuel à l'état dissous.

L'invention va maintenant être décrite en référence aux exemples suivants donnés à titre illustratif et non limitatif.

Le protocole de dissolution utilisé dans les exemples donnés plus bas est le suivant :

Typiquement, il consiste à disperser 180 mg de poudre du substrat (par exemple Pt supporté sur du $CeO_2$) dans 50 mL de solution de dissolution ($\sim$2 $10^{-2}$ M) dans un erlenmeyer en présence d'un barreau aimanté (agitation à 600 rpm).

La solution de dissolution est composée d'un mélange d'acide ascorbique **(AA)** et d'acide nitrique ou sulfurique. Les expériences sont réalisées à température ambiante **(TA),** généralement 25°C. Pendant la dissolution, des prélèvements réguliers d'environ 0,5 mL sont réalisés dans le but de modifier un minimum les conditions expérimentales. Ces prélèvements sont assurés à l'aide d'une seringue munie d'une aiguille et sont directement filtrés sur filtres à seringues PTFE de porosité 0,2 $\mu$m dans le but de séparer la poudre de la solution. Les aliquotes sont ensuite diluées à une concentration appropriée avec $HNO_3$ 2% en vue de leur analyse par ICP-AES. Les éventuels résidus solides et prélèvements réalisés pendant la dissolution sont lavés jusqu'à neutralité et centrifugés avant d'être séparés du liquide surnageant. Après séchage sous vide, ces échantillons solides sont analysés par MEB-EDX et/ou DRX en vue d'étudier leur phase cristalline, leur morphologie et éventuellement leur composition chimique élémentaire. L'avancement de la dissolution est exprimé en pourcentage massique d'oxyde dissous (%.m) calculé comme indiqué dans l'équation 1 ci-dessous :

$$Oxyde\,dissous\,(\%m) = \frac{m_i(t)}{f_i \times m_{oxyde}(t)} \times 100 = \frac{C_i(t) \times V(t)}{f_i \times m_{oxyde}(t)} \times 100 \qquad \text{(Eq. 1)}$$

où :

- $m_i(t)$ représente la masse d'élément (ex : Ce, Zr, ou Tb) mesuré en solution en fonction du temps.
- $m_{oxyde}$ représente la masse d'oxyde initiale ajoutée dans le réacteur.
- $f_i$ est la proportion massique de l'élément dans l'oxyde initial.
- $C_i(t)$ est la concentration (mg.L$^{-1}$) de l'élément dissous et $V(t)$ est le volume de la solution, tous deux mesurés en fonction du temps t.

Il est important de remarquer que les suivis cinétiques ont été corrigés en tenant compte des variations de volumes, de masses, et des prises d'essais effectuées au cours de la dissolution.

Il est enfin à noter que certaines poudres ont subi une analyse thermogravimétrique dans le but de corriger les masses réelles d'oxyde soumises à dissolution (particulièrement pour les oxydes commerciaux à haute surface spécifique).

## Exemples.

Exemple 1.

Dans cet exemple, on montre que le procédé selon l'invention permet la séparation de métaux de la famille des platinoïdes préalablement déposés sur des oxydes de cérium.

A cette fin, des expériences de dissolution ont été réalisées sur des catalyseurs de Pt supportés sur des supports en oxyde de cérium. Le protocole utilisé est le protocole décrit plus haut.

Pour ce faire, des nanoparticules de Pt ont été déposées à la surface d'un support en $CeO_2$ (15 $m^2.g^{-1}$). Le dépôt a été réalisé par réduction *in situ* de $H_2PtCl_6$ par voie sonochimique sous atmosphère d'argon selon le mode opératoire décrit dans le document de Virot, M.; Chave, T. ; Horlait, D. ; Clavier, N. ; Dacheux, N. ; Ravaux, J. ; Nikitenko, S. I. : Catalytic Dissolution of Ceria Under Mild Conditions, J. Mater. Chem. 22, (2012), 14734 [9], et dans le document de Chave, T.; Navarro, N. M.; Nitsche, S.; Nikitenko, S. I. : Mechanism of Pt IV Sonochemical Reduction in Formic Acid Media and Pure Water, Chem. Eur. J. 18, (2012), 3879 [10].

Les catalyseurs supportés ainsi synthétisés ont été mis en suspension dans deux solutions constituées d'un mélange d'acide ascorbique 0,5 M et d'acide sulfurique, respectivement 0,25 M et 0,1 M, sous agitation.

A titre comparatif, des expériences de dissolution ont été réalisées dans les mêmes conditions sur les mêmes supports en oxyde de cérium mais sans platine.

Les résultats des expériences de dissolution et des expériences de dissolution comparatives sont montrés sur la Figure 1 (A,B) qui permet de comparer les cinétiques de dissolution obtenues observées dans les mêmes conditions en présence et en l'absence de Pt.

Il apparaît que la cinétique de dissolution des catalyseurs $CeO_2$/Pt présente un comportement similaire à celle observée en l'absence de platine. La suspension de catalyseur $CeO_2$/Pt dans le milieu ascorbique/sulfurique conduit à la dissolution totale et rapide du support en quelques heures. La dissolution s'effectue de façon quasi-linéaire et dans ces conditions expérimentales, il n'est pas possible de distinguer l'effet du Pt sur la cinétique de dissolution car les différences de vitesses sont peu significatives.

De façon similaire à ce qui est observé en milieu nitrique, on remarque la présence d'une légère inflexion de la courbe de dissolution à l'approche de la dissolution totale de l'oxyde.

Les analyses ICP-AES ont permis de mettre en évidence le comportement réfractaire à la dissolution des nanoparticules de Pt. Les analyses MEB réalisées sur les résidus solides centrifugés après dissolution témoignent de la présence quasi-exclusive des particules de Pt après dissolution (Figure 2).

Ces particules de Pt peuvent être aisément séparées de la solution par filtration. Notons enfin que les nanoparticules de Pt synthétisées et déposées sur le support de cérium ne sont pas visibles par MEB au commencement de la dissolution ; elles s'agglomèrent et apparaissent avec l'avancement de la dissolution.

Dans les exemples 2 à 5 qui suivent, on montre que le procédé selon l'invention peut aussi s'appliquer à des substrats comprenant des supports en oxydes mixtes par exemple de type $(Ce_{0,8}Tb_{0,2})O_2$, ou $(Ce_{0,75}Zr_{0,25})O_2$.

Exemple 2.

Dans cet exemple, on montre que le procédé selon l'invention peut aussi s'appliquer à des substrats comprenant des supports en oxydes mixtes de type $(Ce,Tb)O_2$.

Dans ce but, un essai de dissolution a été réalisé sur l'oxyde mixte, $(Ce_{0,8}Tb_{0,2})O_2$ d'une surface spécifique de 30 $m^2.g^{-1}$, préparé par précipitation oxalique avec une calcination réalisée à 500°C.

Le protocole utilisé est le protocole décrit plus haut.

La Figure 3 (A,B) permet d'illustrer le comportement de $(Ce_{0,8}Tb_{0,2})O_2$ dispersé dans un mélange acide ascorbique 0,5 M / acide sulfurique 0,4 M. La cinétique de dissolution observée dans ces conditions confirme les résultats observés précédemment. En effet, 96% du cérium initialement dispersé sous forme solide peuvent être dosés en solution après 165 min d'agitation à température ambiante. On constate que la dissolution est linéaire, et on note également la présence d'une légère inflexion de courbe à l'approche de la dissolution totale de l'oxyde. Visuellement, la dispersion de l'oxyde mixte en solution présente une couleur marron caractéristique de l'oxyde mixte $(Ce_{0,8}Tb_{0,2})O_2$. Au cours du traitement, la solution vire à l'orange, puis au jaune, avant de devenir limpide confirmant la dissolution des éléments Ce et Tb.

Exemple 3.

Dans cet exemple, on montre que le procédé selon l'invention peut aussi s'appliquer à des substrats comprenant des supports en oxydes mixtes de type $(Ce,Zr)O_2$.

En effet, le dopage d'une matrice en $CeO_2$ par du zirconium est couramment employé dans l'industrie automobile lors de la conception des pots catalytiques. Certaines études ont en effet montré que l'ajout de Zr (sous forme d'oxyde mixte) permet entre autres, d'accroître significativement la stabilité thermique de $CeO_2$ et d'améliorer les propriétés redox et catalytiques du système [1,2].

Donc, dans le but de montrer que le procédé selon l'invention peut aussi s'appliquer à des substrats comprenant des supports en oxydes mixtes de type $(Ce,Zr)O_2$, un essai de dissolution a été réalisé sur l'oxyde $(Ce_{0,75}Zr_{0,25})O_2$

commercial de la société ALDRICH® qui a une surface spécifique de 154 m$^2$.g$^{-1}$.

Le protocole utilisé est le protocole décrit plus haut.

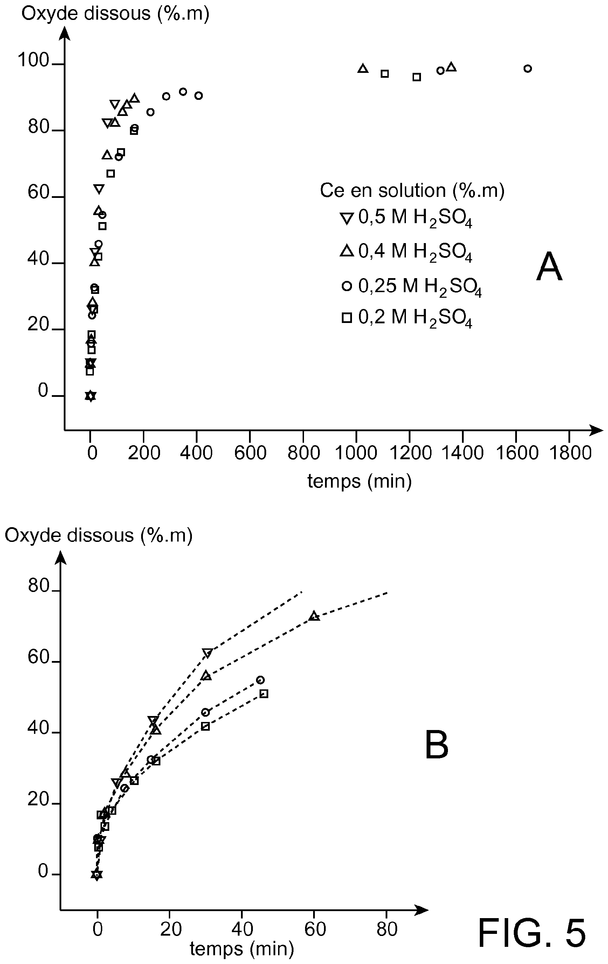

La dispersion de l'oxyde mixte $(Ce_{0,75}Zr_{0,25})O_2$ dans un mélange d'acide ascorbique 0,5 M et d'acide sulfurique 0,4 M conduit à la dissolution complète et rapide du solide comme l'atteste la Figure 4 (A,B). Dans ces conditions, ~90% de l'oxyde initial sont dissous en ~165 min. On remarque également une inflexion de la courbe de dissolution à l'approche de la dissolution totale de l'oxyde. Les cinétiques de dissolution rapportées pour le Ce et le Zr (%.m) sont équivalentes et permettent de souligner la nature congruente de la dissolution. Les cinétiques de dissolution de $(Ce_{0,75}Zr_{0,25})O_2$ en milieu ascorbique 0,5 M / $H_2SO_4$ à différentes concentrations peuvent être observées sur les Figures 5 (A,B) et 6 (A,B). Ces figures sont respectivement centrées sur les éléments Ce et Zr pour ne pas surcharger la figure. On constate encore une fois que la dissolution de l'oxyde mixte est congruente et qu'elle conduit à la dissolution totale et rapide du solide quelle que soit l'acidité choisie. Enfin, on constate que la vitesse de dissolution de l'oxyde augmente avec la concentration de l'acide sulfurique, en accord avec les résultats précédents.

Exemple 4.

Dans cet exemple, on montre que l'augmentation de la température du milieu réactionnel permet d'accélérer les vitesses de dissolution des supports de façon significative.

Dans ce but, on réalise des essais de dissolution sur $(Ce_{0,75}Zr_{0,25})O_2$ (154 m$^2$.g$^{-1}$) en suspension dans un mélange d'acide ascorbique 0,5 M et d'acide sulfurique 0,5 M.

Le protocole utilisé est le protocole décrit plus haut.

Les résultats obtenus lors de ces essais sont portés sur la Figure 7.

Sur la Figure 7, les lignes en pointillés représentent les vitesses initiales de dissolution observées pour le Zr à température ambiante et à 40°C.

Exemple 5.

Dans cet exemple, on montre l'effet de la concentration en acide ascorbique sur la dissolution des supports.

Dans ce but, on réalise des essais de dissolution sur $(Ce_{0,75}Zr_{0,25})O_2$ (154 m$^2$.g$^{-1}$) en suspension dans un mélange d'acide sulfurique 0,5 M et d'acide ascorbique à différentes concentrations.

Le protocole utilisé est le protocole décrit plus haut.

Les résultats obtenus lors de ces essais sont portés sur la Figure 8.

Ces essais permettent de montrer que les dissolutions sont possibles sur une large gamme de concentration en acide ascorbique.

Dans les conditions testées, à savoir avec un excès d'acide ascorbique, la concentration en acide ascorbique ne semble pas influer de façon significative sur les cinétiques de dissolution, comme en atteste la Figure 8.

En effet, la suspension de l'oxyde dans un milieu ascorbique 0,1 M conduit à la dissolution totale et rapide de l'oxyde en quelques heures.

Exemple 6.

Dans cet exemple on montre que le procédé selon l'invention peut être mise en oeuvre avec succès avec une solution de dissolution comprenant un acide minéral, à savoir de l'acide sulfurique, et de l'acide ascorbique, du catéchol, ou de l'acide gallique en tant que molécule naturelle anti-oxydante jouant le rôle d'agent réducteur de la terre rare.

On présente dans le Tableau I ci-dessous, des résultats obtenus dans le cadre d'essais de dissolution de $CeO_2$ réalisés avec des solutions de dissolution comprenant de l'acide sulfurique, et de l'acide ascorbique (AA) ou du catéchol ou de l'acide gallique.

Le protocole utilisé est le protocole décrit plus haut.

TABLEAU I

| Cinétiques initiales de dissolution de $CeO_2$ (15 m$^2$.g$^{-1}$) en milieu sulfurique en présence de différentes molécules organiques aux propriétés réductrices. Milieu réactionnel : m($CeO_2$) ~180 mg ; 25°C ; agitation magnétique. | | | |
|---|---|---|---|
| **Milieu** | **AA 0,5 M $H_2SO_4$ 0,5 M** | **Catéchol 0,5 M $H_2SO_4$ 0,5 M** | **Ac. Gallique 0,2 M $H_2SO_4$ 0,2 M** |
| $R_{L,0}(Ce)$ $\pm$10% en mg.m$^{-2}$.min$^{-1}$ | 7,1 10$^{-1}$ | 2,2 10$^{-1}$ | 4,1 10$^{-2}$ |

Les résultats de ces essais montrent que la dissolution du $CeO_2$ peut être réalisée avec succès avec des solutions de dissolution qui contiennent des molécules ayant des propriétés réductrices, autres que l'acide ascorbique, à savoir le catéchol ou l'acide gallique.

Cependant, si la dissolution du $CeO_2$ peut être effectivement réalisé aussi bien avec une solution de dissolution contenant du catéchol ou de l'acide gallique qu'avec une solution contenant de l'acide ascorbique, et ce avec une bonne cinétique de dissolution, l'utilisation de l'acide ascorbique dans la solution de dissolution présente certains avantages.

Ainsi, les résultats obtenus avec la solution de dissolution qui contient de l'acide ascorbique sont meilleurs d'un point de vue cinétique.

Par ailleurs, l'acide ascorbique permet d'obtenir des solutions limpides après dissolution alors que les autres molécules peuvent colorer fortement les solutions ce qui peut être éventuellement gênant.

Concernant l'acide gallique, la solubilisation de cette molécule a été réalisée dans un mélange hydroalcoolique, alors que l'acide ascorbique est solubilisé dans l'eau pure ce qui est un avantage supplémentaire en faveur de l'utilisation de l'acide ascorbique.

Exemple 7.

Dans cet exemple on montre que les vitesses de dissolution augmentent de manière significative avec la concentration en protons dans le milieu, à savoir avec l'acidité de la solution, et ce, pour une même concentration initiale en acide ascorbique (AA).

On montre aussi que la nature de l'acide minéral de la solution de dissolution joue aussi un rôle sur les vitesses de dissolution, et que de meilleurs résultats sont obtenus avec une solution de dissolution contenant de l'acide sulfurique en tant qu'acide minéral, plutôt qu'avec une solution de dissolution contenant de l'acide nitrique en tant qu'acide minéral.

On présente dans le Tableau II ci-dessous, des résultats obtenus dans le cadre d'essais de dissolution de $CeO_2$, réalisés avec des solutions de dissolution comprenant de l'acide nitrique à diverses concentrations, et de l'acide ascorbique.

Le protocole utilisé est le protocole décrit plus haut.

TABLEAU II

| Cinétiques initiales de dissolution de $CeO_2$ (15 $m^2.g^{-1}$) en fonction de la concentration d'acide nitrique. Milieu réactionnel : AA 0,5 M / $HNO_3$ ; $m(CeO_2)$ ~180 mg ; V = 50 mL ; agitation magnétique. | | | | | |
|---|---|---|---|---|---|
| $[HNO_3]$ en mol.$L^{-1}$ | 0,1 | 0,5 | 1,0 | 2,0 | 3,0 |
| $R_{L,0}(Ce)$ $\pm$10% en mg.$m^{-2}$.$min^{-1}$ | 1,4 $10^{-3}$ | 3,7 $10^{-3}$ | 1,6 $10^{-2}$ | 7,3 $10^{-2}$ | 2,2 $10^{-1}$ |

On présente dans le Tableau III ci-dessous, des résultats obtenus dans le cadre d'essais de dissolution de $CeO_2$, réalisés avec des solutions de dissolution comprenant de l'acide sulfurique à diverses concentrations, et de l'acide ascorbique.

Le protocole utilisé est le protocole décrit plus haut.

TABLEAU III

| Cinétiques initiales de dissolution de $CeO_2$ (15 $m^2.g^{-1}$) en fonction de la concentration d'acide sulfurique. Milieu réactionnel : AA 0,5 M / $H_2SO_4$ ; $m(CeO_2)$ ~180 mg ; V = 50 mL ; agitation magnétique. | | | |
|---|---|---|---|
| $[H_2SO_4]$ en mol.$L^{-1}$ | 0,1 | 0,25 | 0,5 |
| $R_{L,0}(Ce)$ $\pm$10% en mg.$m^{-2}$.$min^{-1}$ | 2,1 $10^{-1}$ | 4,6 $10^{-1}$ | 7,1 $10^{-1}$ |

On peut comparer les vitesses initiales de dissolution obtenues avec les solutions de dissolution selon l'invention contenant en tant qu'agent réducteur de l'acide ascorbique (notamment TABLEAUX I, II, et III ci-dessus) ou du catéchol ou de l'acide gallique (TABLEAU I), avec les vitesses initiales de dissolution obtenus avec les solutions non conformes à l'invention du document [9], Tableau 1 et Tableau 2, qui contiennent du nitrate d'hydrazinium et/ou de l'acide formique en tant qu'agent réducteur.

Les résultats présentés dans le document [9] démontrent que la dissolution de $CeO_2$ est extrêmement lente avec toutes les solutions de dissolution de ce document.

Les vitesses initiales de dissolution sont bien plus élevées avec les solutions selon l'invention qu'avec les solutions du document [9], démontrant notamment l'influence décisive de l'agent réducteur spécifique mise en oeuvre selon l'invention, tel que l'acide ascorbique, sur l'accroissement de la vitesse de dissolution.

**REFERENCES**

[1] Kašpar, J.; Fornasiero, P.; Graziani, M., Use of CeO2-based Oxides in the Three-way Catalysis, Catal. Today 50, (1999), 285.

[2] Kašpar, J.; Fornasiero, P.; Hickey, N., Automotive Catalytic Converters: Current Status and Some Perspectives, Catal. Today 77, (2003), 419.

[3] Blazy, P.; Jehanne, Y., Recyclage des Métaux Précieux, Techniques de l'ingénieur M2, (2002), 394.

[4] Rumpold, R.; Antrekowitsch, J., Recycling of Platinum Group Metals From Automotive Catalysts by an Acidic Leaching Process, The Southern African Institute of Mining and Metallurgy, Platinum 2012.

[5] Bleiwas, D. I., Potential for Recovery of Cerium Contained in Automotive Catalytic Converters: U. S. Geological Survey Open-File Report 2013-1037, 10 p., http://pubs.usgs.gov/of/2013/1037.

[6] Fornalczyk, A.; Saternus, M., Catalytic Converters as a Source of Platinum, Metalurgija 50, (2011), 261.

[7] Saternus, M.; Fornalczyk, A., Possible Ways of Refining Precious Group Metals (PGM) Obtained From Recycling of the Used Auto Catalytic Converters, Metalurgija 52, (2013), 267.

[8] Benson, M.; Bennett, C. R.; Harry, J. E.; Patel, M. K.; Cross, M., The Recovery Mechanism of Platinum Group Metals from Catalytic Converters in Spent Automotive Exhaust Systems, Resour. Conserv. Recycl. 31, (2000), 1.

[9] Virot, M.; Chave, T. ; Horlait, D. ; Clavier, N. ; Dacheux, N. ; Ravaux, J. ; Nikitenko, S. I. : Catalytic Dissolution of Ceria Under Mild Conditions, J. Mater. Chem. 22, (2012), 14734

[10] Chave, T.; Navarro, N. M.; Nitsche, S.; Nikitenko, S. I. : Mechanism of Pt IV Sonochemical Reduction in Formic Acid Media and Pure Water, Chem. Eur. J. 18, (2012), 3879.

**Revendications**

1. Procédé de traitement d'un substrat solide comprenant un support comprenant, de préférence constitué par, au moins un oxyde choisi parmi les oxydes d'un premier métal choisi parmi les terres rares, les oxydes mixtes d'un premier métal choisi parmi les terres rares et d'au moins un deuxième métal différent du premier métal, et les mélanges d'un oxyde d'un premier métal choisi parmi les terres rares et d'au moins un oxyde d'au moins un deuxième métal différent du premier métal, ledit support comprenant au moins une surface sur laquelle sont déposées des particules constituées par au moins un métal noble, afin de séparer le premier métal, le deuxième métal éventuel, et le métal noble qui constitue les particules, ledit procédé comprenant une étape de dissolution sélective du support, au cours de laquelle on met en contact le substrat avec une solution de dissolution comprenant au moins un acide minéral et au moins un agent réducteur de la terre rare ou des terres rares du support, moyennant quoi on obtient une solution contenant le premier métal et le deuxième métal éventuel à l'état dissous, dans laquelle se trouvent en suspension les particules constituées par le métal noble ; **caractérisé en ce que** l'agent réducteur de la terre rare ou des terres rares du support est choisi parmi les molécules naturelles anti-oxydantes choisies parmi l'acide ascorbique, le catéchol, l'acide gallique, et leurs mélanges.

2. Procédé selon la revendication 1, dans lequel le premier métal est choisi parmi le cérium, le praséodyme, et le terbium.

3. Procédé selon l'une quelconque des revendications précédentes, dans lequel le deuxième métal est choisi parmi les terres rares telles que le cérium, le praséodyme, l'ytterbium, le samarium, le terbium, et l'europium ; et le zirconium.

4. Procédé selon l'une quelconque des revendications précédentes, dans lequel l'oxyde est choisi parmi l'oxyde de cérium $CeO_2$; les oxydes mixtes de cérium et d'au moins une autre terre rare tels que les oxydes mixtes de cérium et de terbium, et les oxydes mixtes de cérium et de zirconium ; et les mélanges d'oxyde de cérium et d'au moins un oxyde d'une autre terre rare tels que les mélanges d'oxyde de cérium et d'oxyde de terbium.

5. Procédé selon l'une quelconque des revendications précédentes, dans lequel le métal noble est choisi parmi les platinoïdes tels que le platine, le ruthénium, le palladium, le rhodium, l'iridium, le rhénium, et l'osmium ; l'or ; et leurs alliages.

6. Procédé selon l'une quelconque des revendications précédentes, dans lequel la solution de dissolution est une solution aqueuse ou une solution hydro-alcoolique.

**7.** Procédé selon l'une quelconque des revendications précédentes, dans lequel la concentration en acide minéral est de 0,1 M à 5 M, de préférence de 0,1 M à 3 M, par exemple de 0,5 M à 2 M, et la concentration en agent réducteur est de 0,1 M à sa limite de solubilité en solution, par exemple 0,5 M.

**8.** Procédé selon l'une quelconque des revendications précédentes, dans lequel l'acide minéral est choisi parmi l'acide nitrique, l'acide sulfurique, l'acide chlorhydrique et leurs mélanges.

**9.** Procédé selon la revendication 8, dans lequel la solution de dissolution comprend de l'acide sulfurique ou de l'acide nitrique, et de l'acide ascorbique.

**10.** Procédé selon l'une quelconque des revendications précédentes, dans lequel la mise en contact du substrat avec la solution de dissolution est réalisée à une température de 10°C à 50°C, par exemple de 20°C à 40°C, et à la pression atmosphérique.

**11.** Procédé selon l'une quelconque des revendications précédentes, dans lequel l'oxyde a une surface spécifique de 4 $m^2.g^{-1}$ à 250 $m^2.g^{-1}$.

**12.** Procédé selon l'une quelconque des revendications précédentes, dans lequel les particules de métal noble représentent de 0,5 à 5% en masse de la masse du substrat solide.

**13.** Procédé selon l'une quelconque des revendications précédentes, dans lequel lors de l'étape de dissolution, et simultanément à la mise en contact, on soumet le substrat et/ou la solution de dissolution à une action mécanique.

**14.** Procédé selon l'une quelconque des revendications précédentes, dans lequel à l'issue de l'étape de dissolution sélective du support, on sépare par une technique de séparation solide-liquide, telle que la filtration ou la centrifugation, les particules constituées par le métal noble en suspension à partir de la solution contenant le premier métal et le deuxième métal éventuel à l'état dissous.

**15.** Procédé selon l'une quelconque des revendications précédentes, dans lequel le substrat solide est un catalyseur de traitement des gaz d'échappement de véhicules automobiles, un élément de pile à combustible, ou un catalyseur industriel utilisé notamment en synthèse organique.


**Patentansprüche**

**1.** Verfahren zum Behandeln eines festen Substrats, enthaltend einen Träger, der mindestens ein Oxid enthält, vorzugsweise daraus besteht, ausgewählt aus den Oxiden eines ersten Metalls, ausgewählt aus Seltenen Erden, Mischoxiden eines ersten Metalls, ausgewählt aus Seltenen Erden, und mindestens eines zweiten Metalls, das sich von dem ersten Metall unterscheidet, und Gemischen eines Oxids eines ersten Metalls, ausgewählt aus Seltenen Erden, und mindestens eines Oxids aus mindestens einem zweiten Metall, das sich von dem ersten Metall unterscheidet, wobei der Träger mindestens eine Oberfläche umfasst, auf der Partikel abgeschieden sind, die aus mindestens einem Edelmetall bestehen, um das erste Metall, das eventuelle zweite Metall und das Edelmetall, das die Partikel bildet, zu trennen, wobei das Verfahren einen Schritt der selektiven Auflösung des Trägers umfasst, während dessen das Substrat mit einer Auflösungslösung in Kontakt gebracht wird, die mindestens eine Mineralsäure und mindestens ein Reduktionsmittel der Seltenen Erde bzw. Seltenen Erden des Trägers enthält, wodurch eine Lösung erhalten wird, die das erste Metall und das eventuelle zweite Metall im gelösten Zustand enthält, in der die aus dem Edelmetall bestehenden Partikel in Suspension vorliegen; **dadurch gekennzeichnet, dass** das Reduktionsmittel der Seltenen Erde bzw. selten Erden des Trägers aus den natürlichen Antioxidansmolekülen, ausgewählt aus Ascorbinsäure, Brenzkatechin, Gallussäure und deren Gemische, ausgewählt ist.

**2.** Verfahren nach Anspruch 1, wobei das erste Metall ausgewählt ist aus Cer, Praseodym und Terbium.

**3.** Verfahren nach einem der vorangehenden Ansprüche, wobei das zweite Metall ausgewählt ist aus Seltenen Erden, wie Cer, Praseodym, Ytterbium, Samarium, Terbium, Europium; und aus Zirkonium.

**4.** Verfahren nach einem der vorangehenden Ansprüche, wobei das Oxid ausgewählt ist aus Ceroxid $CeO_2$; Mischoxiden aus Cer und zumindest einer weiteren Seltenen Erde, wie den Mischoxiden aus Cer und Terbium, und den Mischoxiden aus Cer und Zirkonium; und den Gemischen aus Ceroxid und zumindest einem Oxid einer weiteren Seltenen Erde, wie den Gemischen aus Ceroxid und Terbiumoxid.

5. Verfahren nach einem der vorangehenden Ansprüche, wobei das Edelmetall ausgewählt ist aus Platinmetallen wie Platin, Ruthenium, Palladium, Rhodium, Iridium, Rhenium und Osmium; aus Gold; und aus deren Legierungen.

6. Verfahren nach einem der vorangehenden Ansprüche, wobei die Auflösungslösung eine wässrige Lösung oder eine hydro-alkoholische Lösung ist.

7. Verfahren nach einem der vorangehenden Ansprüche, wobei die Konzentration an Mineralsäure 0,1 M bis 5 M, vorzugsweise 0,1 M bis 3 M, beispielsweise 0,5 M bis 2 M beträgt und die Konzentration an Reduktionsmittel 0,1 M an seiner Löslichkeitsgrenze in Lösung, beispielsweise 0,5 M, beträgt.

8. Verfahren nach einem der vorangehenden Ansprüche, wobei die Mineralsäure ausgewählt ist aus Salpetersäure, Schwefelsäure, Salzsäure und deren Gemischen.

9. Verfahren nach Anspruch 8, wobei die Auflösungslösung Schwefelsäure oder Salpetersäure, und Ascorbinsäure enthält.

10. Verfahren nach einem der vorangehenden Ansprüche, wobei das Inkontaktbringen des Substrats mit der Auflösungslösung bei einer Temperatur von 10 °C bis 50 °C, beispielsweise 20 °C bis 40 °C und bei Atmosphärendruck erfolgt.

11. Verfahren nach einem der vorangehenden Ansprüche, wobei das Oxid eine spezifische Oberfläche von 4 $m^2.g^{-1}$ bis 250 $m^2.g^{-1}$ hat.

12. Verfahren nach einem der vorangehenden Ansprüche, wobei die Edelmetallpartikel 0,5 bis 5 Gew.-% der Masse des festen Substrats ausmachen.

13. Verfahren nach einem der vorangehenden Ansprüche, wobei bei dem Schritt des Auflösens und gleichzeitig mit dem Inkontaktbringen das Substrat und/oder die Auflösungslösung einer mechanischen Einwirkung unterworfen wird/werden.

14. Verfahren nach einem der vorangehenden Ansprüche, wobei am Ende des Schritts des selektiven Auflösens des Trägers durch eine Fest-Flüssig-Trennungstechnik, wie Filtration oder Zentrifugation, die Partikel, die aus dem Edelmetall bestehen, in Suspension, von der Lösung getrennt werden, welche das erste und das eventuelle zweite Metall im gelösten Zustand enthält.

15. Verfahren nach einem der vorangehenden Ansprüche, wobei das feste Substrat ein Katalysator zum Behandeln von Kraftfahrzeug-Abgasen, ein Brennstoffzellenelement oder ein industrieller Katalysator, der insbesondere zur organischen Synthese verwendet wird, ist.


**Claims**

1. Method for treating a solid substrate comprising a support comprising, preferably consisting of, at least one oxide chosen among the oxides of a first metal chosen among rare earths, mixed oxides of a first metal chosen among rare earths and of at least one second metal different from the first metal, and mixtures of an oxide of a first metal chosen among rare earths and of at least one oxide of at least one second metal different from the first metal, said support comprising at least one surface whereon are deposited particles consisting of at least one noble metal, so as to separate the first metal, the optional second metal, and the noble metal constituting the particles, said method comprising a step for selective dissolution of the support, during which the substrate is contacted with a dissolution solution comprising at least one mineral acid and at least one reducing agent of the rare earth or rare earths of the support, whereby a solution is obtained containing the first metal and the optional second metal in the dissolved state, wherein the particles consisting of the noble metal are suspended; **characterised in that** the reducing agent of the rare earth or rare earths of the support is chosen among natural antioxidant molecules chosen among ascorbic acid, catechol, gallic acid, and mixtures thereof.

2. Method according to claim 1, wherein the first metal is chosen among cerium, praseodymium, and terbium.

**3.** Method according to any one of the preceding claims, wherein the second metal is chosen among rare earths such as cerium, praseodymium, ytterbium, samarium, terbium, and europium; and zirconium.

**4.** Method according to any one of the preceding claims, wherein the oxide is chosen among cerium oxide $CeO_2$, mixed oxides of cerium and of at least one other rare earth such as mixed oxides of cerium and terbium, and mixed oxides of cerium and zirconium; and mixtures of cerium oxide and at least one oxide of another rare earth such as mixtures of cerium oxide and terbium oxide.

**5.** Method according to any one of the preceding claims, wherein the noble metal is chosen among platinoids such as platinum, ruthenium, palladium, rhodium, iridium, rhenium, and osmium; gold; and alloys thereof.

**6.** Method according to any one of the preceding claims, wherein the dissolution solution is an aqueous solution or a hydro-alcoholic solution.

**7.** Method according to any one of the preceding claims, wherein the mineral acid concentration is from 0.1 M to 5 M, preferably from 0.1 M to 3 M, for example from 0.5 M to 2 M, and the reducing agent concentration is from 0.1 M to the limit of solubility thereof in solution, for example 0.5 M.

**8.** Method according to any one of the preceding claims, wherein the mineral acid is chosen among nitric acid, sulphuric acid, hydrochloric acid and mixtures thereof.

**9.** Method according to claim 8, wherein the dissolution solution comprises sulphuric acid or nitric acid, and ascorbic acid.

**10.** Method according to any one of the preceding claims, wherein the contacting of the substrate with the dissolution solution is carried out at a temperature from 10°C to 50°C, for example from 20°C to 40°C, and at atmospheric pressure.

**11.** Method according to any one of the preceding claims, wherein the oxide has a specific surface area of 4 $m^2.g^{-1}$ to 250 $m^2.g^{-1}$.

**12.** Method according to any one of the preceding claims, wherein the noble metal particles represent from 0.5 to 5% by mass of the mass of the solid substrate.

**13.** Method according to any one of the preceding claims, wherein during the dissolution step, and simultaneously with the contacting, the substrate and/or the dissolution solution is subjected to a mechanical action.

**14.** Method according to any one of the preceding claims, wherein following the selective dissolution step of the support, separation is carried out by means of a solid-liquid separation technique, such as filtration or centrifugation, of the particles consisting of the noble metal in suspension from the solution containing the first metal and the optional second metal in the dissolved state.

**15.** Method according to any one of the preceding claims, wherein the solid substrate is a catalyst for the treatment of exhaust gases from motor vehicles, a fuel cell element, or an industrial catalyst used particularly in organic synthesis.

FIG. 1

A          B          C          D

FIG. 2

Oxyde dissous (%.m)

A

--▲--Ce
--●--Tb

temps (min)

Oxyde dissous (%.m)

B

temps (min)

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE VIROT, M. ; CHAVE, T. ; HORLAIT, D. ; CLAVIER, N. ; DACHEUX, N. ; RAVAUX, J. ; NIKITENKO, S. I.** Catalytic Dissolution of Ceria Under Mild Conditions. *J. Mater. Chem.,* 2012, vol. 22, 14734
- **DE CHAVE, T. ; NAVARRO, N. M. ; NITSCHE, S. ; NIKITENKO, S. I.** Mechanism of Pt IV Sonochemical Reduction in Formic Acid Media and Pure Water. *Chem. Eur. J.,* 2012, vol. 18, 3879
- **KAŠPAR, J. ; FORNASIERO, P. ; GRAZIANI, M.** Use of CeO2-based Oxides in the Three-way Catalysis. *Catal. Today,* 1999, vol. 50, 285
- **KAŠPAR, J. ; FORNASIERO, P. ; HICKEY, N.** Automotive Catalytic Converters: Current Status and Some Perspectives. *Catal. Today,* 2003, vol. 77, 419
- **BLAZY, P. ; JEHANNE, Y.** Recyclage des Métaux Précieux. *Techniques de l'ingénieur M2,* 2002, 394
- **RUMPOLD, R. ; ANTREKOWITSCH, J.** Recycling of Platinum Group Metals From Automotive Catalysts by an Acidic Leaching Process. *The Southern African Institute of Mining and Metallurgy,* 2012

- **BLEIWAS, D. I.** Potential for Recovery of Cerium Contained in Automotive Catalytic Converters. *U. S. Geological Survey Open-File Report 2013-1037, http://pubs.usgs.gov/of/2013/1037*
- **FORNALCZYK, A. ; SATERNUS, M.** Catalytic Converters as a Source of Platinum. *Metalurgija,* 2011, vol. 50, 261
- **SATERNUS, M. ; FORNALCZYK, A.** Possible Ways of Refining Precious Group Metals (PGM) Obtained From Recycling of the Used Auto Catalytic Converters. *Metalurgija,* 2013, vol. 52, 267
- **BENSON, M. ; BENNETT, C. R. ; HARRY, J. E. ; PATEL, M. K. ; CROSS, M.** The Recovery Mechanism of Platinum Group Metals from Catalytic Converters in Spent Automotive Exhaust Systems. *Resour. Conserv. Recycl.,* 2000, vol. 31, 1
- **VIROT, M. ; CHAVE, T. ; HORLAIT, D. ; CLAVIER, N. ; DACHEUX, N. ; RAVAUX, J. ; NIKITENKO, S. I.** Catalytic Dissolution of Ceria Under Mild Conditions. *J. Mater. Chem.,* 2012, vol. 22, 14734
- **CHAVE, T. ; NAVARRO, N. M. ; NITSCHE, S. ; NIKITENKO, S. I.** Mechanism of Pt IV Sonochemical Reduction in Formic Acid Media and Pure Water. *Chem. Eur. J.,* 2012, vol. 18, 3879